# DEMANDE DE BREVET EUROPEEN

(11) **EP 1 933 389 A2**
(43) Date de publication de la demande: **18.06.2008**
(21) Numéro de dépôt: 07291503.6
(22) Date de dépôt: 12.12.2007
(51) Int. Cl.: H01L 31/042, H01L 31/048, F24J 2/52, E04H 6/02, E04D 13/18

(54) **Installation de production d'energie solaire et de couverture, application à la couverture de zones de stationnement de véhicules**

(30) Priorité: 15.12.2006 FR 0610949
(71) Demandeur: Sunrise, 92290 Chatenay Malabry (FR)
(72) Inventeur: Caputo, Marco, 92290 Chatenay Malabry (FR); Morane, Pierre, 92290 Chatenay Malabry (FR)
(74) Mandataire: Demulsant, Xavier

(57) **Abrégé**

Installation de production d'énergie solaire et de couverture, cette installation comprenant deux fermes (1) longitudinales supportant des pannes (2), des panneaux (3) de production d'énergie solaire formant élément de couverture et étant fixés sur ces pannes (2), caractérisée en ce que chaque ferme (1) est pourvue d'une pièce d'appui articulé (4) et est en porte à faux au-delà de cette pièce d'appui articulé (4), les membrures (5) des fermes (1) s'étendant en surplomb dans un plan incliné par rapport à l'horizontale, au moins une des fermes (1) étant pourvue d'une pièce bi-articulée formant jambe de force (6) et permettant le pivotement des fermes (1) par rapport à leurs pièces d'appui articulé (4), de sorte à permettre une variation de l'angle des membrures (5) des fermes (1), et, par là même, une variation dans l'inclinaison des panneaux (3) de production d'énergie solaire.

## Description

L'invention se rapporte au domaine technique des énergies renouvelables.

Par « *énergie renouvelable* » on désigne ici une source d'énergie qui se renouvelle assez rapidement pour être considérée comme inépuisable à l'échelle de l'homme.

L'invention concerne plus particulièrement les domaines techniques de l'énergie solaire thermique ou photovoltaïque.

Par « *énergie solaire thermique* » on désigne ici l'énergie thermique obtenue par concentration du rayonnement solaire.

Par « *énergie photovoltaïque* » on désigne ici l'électricité produite par transformation d'une partie du rayonnement solaire à l'aide de cellules photovoltaïques.

La présente invention se rapporte à des structures comportant des moyens de production d'énergie renouvelable et destinées à faire de l'ombre.

L'invention trouve des applications avantageuses dans la couverture de grands espaces tels que zones de stationnement de véhicules, notamment pour les clients de centres commerciaux ; mais aussi les voies de circulation, les espaces désertiques.

On connaît déjà, dans l'art antérieur, différentes structures de couverture, formant protection vis-à-vis du soleil, et comprenant des capteurs d'énergie solaire.

La grande majorité de ces structures de couverture sont conçues pour abriter un seul véhicule. Ainsi, par exemple, le document EP 1 696 087 présente un abri pour voiture, cet abri comprenant un toit plan monté articulé en rotation sur deux poteaux latéraux. Le document FR 2 399 518 décrit une pergola dont la couverture a un aspect général de store vénitien. Cette couverture comprend en effet des poutres parallèles en matériau isolant thermique, et des capteurs solaires perpendiculaires aux poutres et orientables, un fluide caloporteur circulant dans des tubulures internes aux capteurs. On peut se référer également documents JP 2001164776, JP 200233502, JP 200230774, JP 200155782, US 6631591.

On connaît également des structures de couverture pour de grandes surfaces de stationnement. On peut se référer, par exemple, aux documents US 2003/0094194, US 4 835 918.

Deux types de couverture photovoltaïques sont proposés : les couvertures fixes, dans lesquelles les panneaux solaires sont montés sur un châssis, sans possibilité de modifier l'orientation des panneaux, et les couvertures mobiles, plus onéreuses, dans lesquelles les panneaux photovoltaïques sont articulés.

Les éléments de couverture mobile sont par exemple décrits dans les documents suivants : EP 1 626 140 de la société italienne Extel ; WO 2004/081306 de la société américaine *Powerlight Corporation* (générateur d'un mégawatt pour la ville de Gwangju, en Corée).

Les éléments de couverture fixes ont été mis en oeuvre, par exemple, par la société *Schott solar,* à Riverside, pour une couverture de cent cinquante places de parking (SunPort® CB), cette couverture comprenant des potences fixes supportant des panneaux photovoltaïques (Siemens-Shell SP-75). La société *Chevron* a également réalisé plusieurs couvertures photovoltaïques pour des parkings : Foothill-De Anza community Colege District, Los Angeles Pierce College.

La société *Powerlight Corporation* propose des éléments de couverture photovoltaïques fixes illustrés dans les documents suivants : USD511576S, USD408554. Ces éléments de couverture comprennent une surface supérieure plane, inclinée par rapport à l'horizontale. Une installation de ce type, générant une puissance de 750 kW a été réalisée pour la couverture d'une zone de stationnement de quatre cents véhicules pour la base navale de Coronado, en Californie. Cette installation comporte environ trois mille panneaux photovoltaïques. Ces panneaux sont montés sur une structure métallique formée par l'assemblage de poutres de section en I. Le courant continu produit par les cellules photovoltaïques est transformé en courant alternatif par des onduleurs placés sur site, des transformateurs alimentant la base navale en triphasé 12kV. Une autre installation du même type a été réalisée pour la couverture d'une zone de stationnement de cent quatre vingt véhicules pour le centre de distribution de courrier de Sacramento, en Californie. Cette installation comporte environ deux milles panneaux photovoltaïques, pour une puissance de 400 kW.

Les structures fixes proposées par la société californienne *Power Light* présentent des inconvénients. En premier lieu, ces structures définissent des surfaces horizontales de panneaux de très grandes dimensions, ce qui pose de nombreux problèmes en cas de précipitations abondantes. A titre d'illustration, le record d'enneigement à Sacramento date de 1888, pour seulement neuf centimètres, et les pluies y sont également rares. Coronado bénéficie également d'un climat exceptionnel, les chutes de neige ne dépassant pas quelques centimètres, les pluies étant quasi inexistantes entre avril et octobre.

La protection de l'environnement et le développement durable sont devenus des préoccupations naturelles pour les populations d'un grand nombre de pays. Les énergies renouvelables font l'objet de soutiens importants par les législateurs, en particulier en termes de financement à l'installation ou en termes de fiscalité. Des programmes de toits photovoltaïques raccordés au réseau ont ainsi été lancés au Japon et en Allemagne et se généralisent depuis 2001. En avril 2000, l'Allemagne a lancé un programme « *100 000 toits solaires* » prévoyant le rachat du courant photovoltaïque produit à 0.5 €/kWh, et des prêts à taux zéro pour l'installation. La France a mis également en place, dès 2001, des programmes d'incitation pour des installations photovoltaïques intégrées au bâtiment : prix de rachat du kWh garanti, subventions, déductions fiscales. L'énergie solaire, en particulier photovoltaïque, fait l'objet de développements techniques constants : silicium cristallin, silicium amorphe, couches minces type AsGa, CdTe, CIS, cellules photovoltaïques en plastique, cellules de Graetzel.

En dépit de ce contexte très favorable, les couvertures solaires de zones de stationnement ou analogues ne connaissent pas de développement important.

La demanderesse s'est attachée à proposer une nouvelle conception de couverture solaire, notamment pour zone de stationnement de véhicules, cette nouvelle conception ne présentant pas les inconvénients de celles proposées antérieurement.

A cette fin, l'invention se rapporte, selon un premier aspect, à une installation de production d'énergie solaire et de couverture, cette installation comprenant deux fermes longitudinales supportant des pannes, des panneaux de production d'énergie solaire formant élément de couverture et étant fixés sur ces pannes, chaque ferme étant pourvue d'une pièce d'appui articulée et étant en porte à faux au-delà de cette pièce d'appui articulé, les membrures des fermes s'étendant en surplomb dans un plan incliné d'un angle α par rapport à l'horizontale, au moins une des fermes étant pourvue d'une pièce bi-articulée formant jambe de force et permettant le pivotement des fermes par rapport à leurs pièces d'appui articulé, de sorte à permettre une variation de l'angle α des membrures des fermes, et, par là même, une variation dans l'inclinaison des panneaux de production d'énergie solaire.

Les fermes en porte à faux permettent d'obtenir une couverture de large surface et une grande étendue de supports des panneaux, pour un faible encombrement au sol, l'installation présentant une esthétique soignée.

L'installation présente, selon diverses réalisations, les caractères suivants, le cas échéant combinés.
- chaque ferme a une forme générale cintrée et comprend une première partie inclinée d'un angle β par rapport à la verticale prolongée par une deuxième partie formant l'angle α par rapport à l'horizontale. Cette forme permet de limiter le volume de matériau nécessaire à la construction, et de maximiser le processus de fabrication, pour une fabrication en série ;
- au moins une ferme est une poutrelle en acier monobloc ou formée par assemblage d'éléments métalliques ;
- au moins une des fermes est un profilé PRS (profilé reconstitué soudé) ou une poutre caisson ;
- au moins une des fermes est une poutre en bois monobloc ou formée par assemblage d'éléments en bois, en particulier lamellé collé ;
- la deuxième partie des fermes présente une longueur comprise entre une et cinq fois celle de la première partie de ces fermes;
- l'angle β est compris entre 5 et 25 degrés ;
- l'angle α formé par les membrures des fermes est réglable entre 10 et 40 degrés.

Dans une mise en oeuvre avantageuse, l'installation comprend une deuxième surface de couverture, des moyens de récupération de l'eau de pluie s'étendant entre la première surface de couverture, formée par les panneaux de production d'énergie solaire et la deuxième surface de couverture.

Avantageusement, la deuxième surface de couverture est reliée aux fermes par au moins un buton bi-articulé formant jambe de force et permettant le pivotement de cette deuxième surface de couverture par rapport aux fermes.

La deuxième surface de couverture est réalisée en un matériau choisit parmi le groupe comprenant les panneaux de production d'énergie solaire, les toiles tendues, les tôles perforées, les treillis en métal déployé.

Avantageusement, les panneaux de production d'énergie solaire sont des panneaux photovoltaïques.

Dans une mise en oeuvre avantageuse, l'installation comprend, sous les panneaux de production d'énergie solaire, une sous-couche anti-effraction et anti-nidification, de type métallique en filet, bardage, ou feuille métallique.

Avantageusement, l'installation comprend un dispositif de suivi télémétrique de la production électrique instantanée.

L'invention se rapporte, selon un deuxième aspect, à l'application de l'installation telle que décrite ci dessus à la couverture de zones de stationnement de véhicules, notamment parkings de centres commerciaux, l'énergie électrique produite étant réinjectée dans le réseau de distribution ou utilisée sur place.

Avantageusement, l'installation comprend des moyens d'affichage pour le public de la quantité d'électricité produite.

D'autres objets et avantages de l'invention apparaîtront au cours de la description suivante de modes de réalisation, description qui va être effectuée en se référant aux dessins annexés, dans lesquels :
- la figure 1 est une vue en perspective, selon un premier angle, d'un module de production d'énergie et de couverture selon un mode de réalisation ;
- la figure 2 est une vue en perspective du module représenté en figure 1, selon un deuxième angle de vue ;
- la figure 3 est une vue en perspective d'une installation comprenant une pluralité de modules ;
- la figure 4 est une vue d'un passage pour piétons entre deux modules, selon un mode de mise en oeuvre ;
- la figure 5 est une vue latérale d'un module de production d'énergie et de couverture ;
- les figures 6 et 7 sont des vues avant et arrière d'un module du type représenté en figure 1.

L'installation de production d'énergie solaire et de couverture comprend deux fermes 1 longitudinales supportant des pannes 2.

Des panneaux 3 de production d'énergie solaire formant élément de couverture sont fixés sur ces pannes 2.

Chaque ferme 1 est pourvue d'une pièce d'appui articulé 4 et est en porte à faux au-delà de cette pièce d'appui articulé 4.

Les membrures 5 des fermes 1 s'étendent en surplomb dans un plan P incliné d'un angle α par rapport à l'horizontale.

Au moins une des fermes 1 est pourvue d'une pièce bi-articulée formant jambe de force 6 et permettant le pivotement des fermes 1 par rapport à leurs pièces d'appui articulé 4, de sorte à permettre une variation de l'angle α des membrures 5 des fermes 1, et, par là même, une variation dans l'inclinaison des panneaux 3 de production d'énergie solaire.

Par « jambe de force » on désigne ici une pièce inclinée permettant de réduire la portée de la poutre 1.

Par « membrures » on désigne ici les parties extrêmes supérieures des fermes 1, sur lesquelles sont montées les pannes 2, c'est-à-dire les poutrelles horizontales de charpente supportant les panneaux 3 de couverture.

Dans les modes de réalisation représentés, les panneaux 3 produisant l'énergie sont photovoltaïques. Il est entendu toutefois que ces panneaux peuvent être, dans d'autres réalisations, produire de l'énergie solaire thermique.

Dans un mode de réalisation, les fermes 1 sont des poutres caissons, par exemple métalliques. Les fermes 1 sont alors des éléments de structure, de section creuse.

Dans une première mise en oeuvre, les fermes 1 sont obtenues par assemblage de parois qui peuvent être pleines, évidées ou en treillis.

Dans une deuxième mise en oeuvre, les fermes 1 sont obtenues par cintrage d'un élément longiligne.

Dans un autre mode de réalisation, les fermes 1 sont en bois, notamment en lamellé collé, c'est-à-dire une pièce en bois obtenue par contrecollage de lames multiples de bois. La colle utilisée est par exemple de type caséine, aminoplaste (urée formol), ou phénoplaste (résorcine, mélamine).

Dans un autre mode de réalisation, les fermes 1 sont de type bois/acier et comportent, dans une mise en oeuvre particulière, une face inférieure et une face supérieure en bois, et un contreventement métallique entre ces deux faces intérieures et extérieures.

Dans un autre mode encore de réalisation, les fermes sont formées par un assemblage mécano soudé de profilés métalliques, notamment IPE, IPN.

Ainsi qu'il apparaît sur les figures, les fermes 1 comportent une première partie 7, de fixation au sol, et une deuxième partie 8, supportant les pannes 2.

Cette deuxième partie 8 est avantageusement inclinée d'un angle α compris entre 15 et 35 degrés par rapport à l'horizontale.

Une inclinaison de cette deuxième partie 8, d'un angle maximum facilite le nettoyage naturel des panneaux, et réduit les risques de stagnation des précipitations. La possibilité de modifier l'inclinaison des panneaux permet une adaptation aux conditions climatiques, aux saisons, et à la technologie employée pour les panneaux 3..

Dans une réalisation avantageuse, l'angle d'inclinaison α est compris entre 15 et 25°, et plus particulièrement entre 19 et 21 degrés.

A titre indicatif, la largeur de l'installation est de dix mètres environ, le point culminant de la structure étant environ à 4.7 mètres, l'installation mesurant environ quarante mètres de long sur dix mètres de large et permettant de couvrir une surface de stationnement de trente véhicules.

Dans une mise en oeuvre avantageuse, l'installation comprend une deuxième surface de couverture 9, des moyens 10 de récupération de l'eau de pluie s'étendant entre la première surface de couverture 11, formée par les panneaux 3 de production d'énergie solaire et la deuxième surface de couverture 9.

Les moyens 10 de récupération d'eau de pluie comportent par exemple, comme représenté, une gouttière 12 autoportante reliée à une descente 13 en partie masquée à la vue par les fermes 1. Lorsque les précipitations sont importantes, la gouttière 12 est avantageusement fixée sur les fermes 1 ou sur un longeron monté sur les fermes.

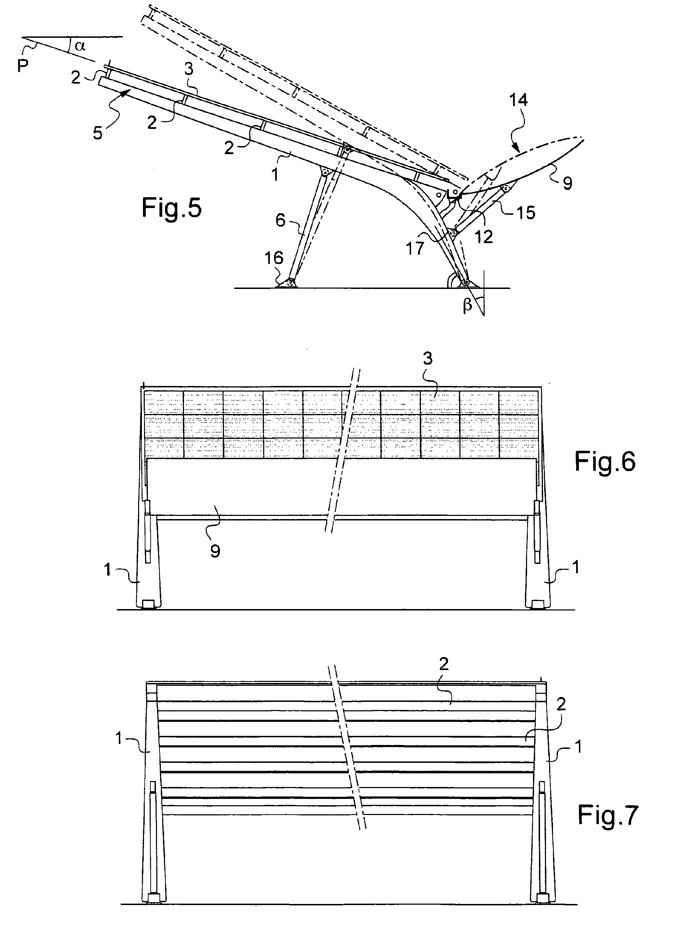

La deuxième surface de couverture 9 est par exemple en toile tendue. Elle est alors avantageusement orientée vers le nord. Les toiles sont par exemple du type commercialisé par la société *Ferrari* sous la marque Fluotop. L'utilisation de toiles et membranes tendues en architecture extérieure est connue en soit dans le domaine technique dénommé « *architecture textile* ». Ainsi qu'il est connu en soi, les toiles tendues sont pourvues de courbures permettant un écoulement rapide de l'eau de pluie et évitant l'accumulation de neige. Les toiles 14 sont pourvues par exemple d'une double concavité, longitudinale et transversale, à la manière d'une lentille optique biconcave, comme schématisé en figure 5.

Avantageusement, la deuxième surface de couverture 9 est reliée aux fermes 1 par au moins un buton 15 bi-articulé formant jambe de force et permettant le pivotement de cette deuxième surface de couverture 9 par rapport aux fermes 1.

La deuxième surface de couverture 9 est réalisée en un matériau choisit parmi le groupe comprenant les panneaux de production d'énergie solaire, les toiles tendues, les tôles perforées, les treillis en métal déployé.

Avantageusement, les panneaux 3 de production d'énergie solaire sont des panneaux photovoltaïques.

Dans une mise en oeuvre, les panneaux utilisent du silicium monocristallin offrant entre 15 et 17% de transformation du rayonnement solaire.

A titre d'exemple, les panneaux sont vendus par la société allemande Solarwatt, sous la référence M230-96 GET LK.

Ces panneaux sont de type verre tedlar®, au silicium monocristallin, de 244Wc.

Quelques propriétés de ce produit Solarwatt®, communiquées par le fabricant, sont les suivantes :
- tension nominale 47V ;
- intensité nominale 5.19 A ;
- 96 cellules silicium cristallin, de 125 mm de côté ;
- cadre en aluminium, verre trempé de 4 mm en face avant, face arrière en trois couches Tedlar-Polyester-Tedlar;
- dimensions : 1610x1060x50 mm ;
- poids : 24 kg ;
- températures de travail comprises entre -40°C et +45°C.

Dans une mise en oeuvre avantageuse, l'installation comprend, sous les panneaux de production d'énergie solaire, une sous-couche anti-effraction et anti-nidification, de type métallique en filet, bardage, ou feuille métallique.

Dans une mise en oeuvre, les fermes 1 et pannes 2 supportant les panneaux 3 photovoltaïques sont métallique, fabriqués en usine et montés sur place sur des fondations en béton. L'inclinaison des panneaux 3 est par exemple à 19°, pour une orientation 10° est, avec une latitude de pose de 43.4° nord.

Avantageusement, l'installation comprend un dispositif de suivi télémétrique de la production électrique instantanée.

L'installation comprend également une structure souterraine.

Cette structure souterraine comprend les fondations de la structure aérienne, les passages de câbles électriques, et les conduits de circulation de l'eau de pluie.

Dans une mise en oeuvre, l'eau de pluie est récupérée dans une citerne pour un usage ultérieur. Par exemple, lorsque l'installation est située à proximité d'une habitation ou d'un centre commercial, l'eau de pluie pourra être employée pour les sanitaires, l'arrosage des plates bandes, une installation de lavage de véhicules, réserve d'eau pour systèmes de lutte contre les incendies.

Lorsque les panneaux de production d'énergie électrique sont des panneaux photovoltaïques, l'installation comprend au moins un onduleur et au moins un transformateur.

Les onduleurs sont par exemple de marque SMA type Sunny Boy 7000 LT.

A titre indicatif, une installation comprend 180 panneaux et six onduleurs, tous raccordés à un boîtier de connexion, lui-même raccordé par le biais de câbles, au transformateur, pour le raccordement au réseau.

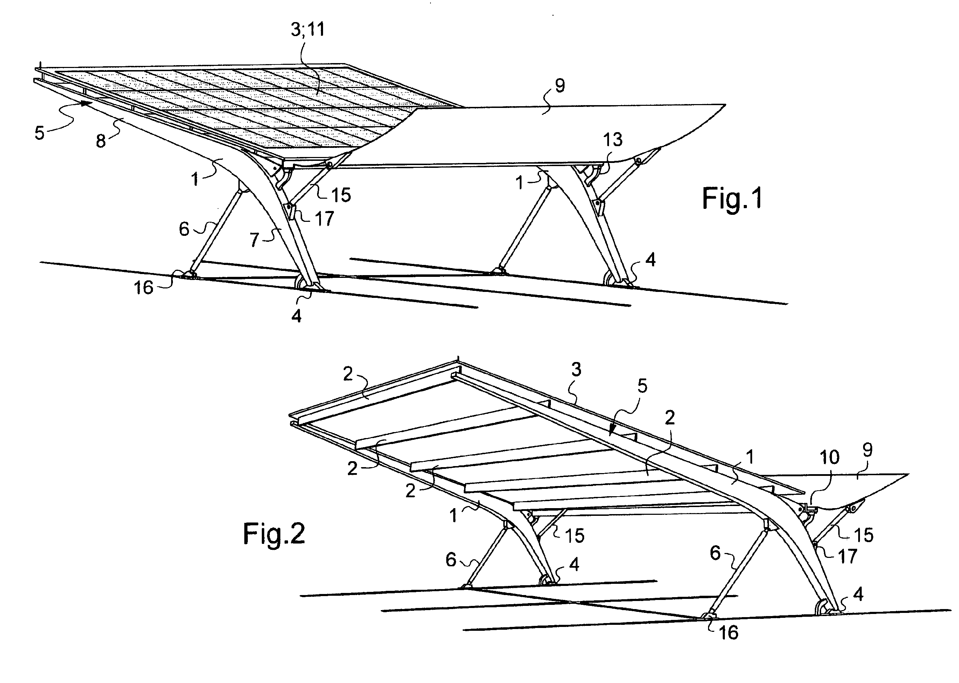

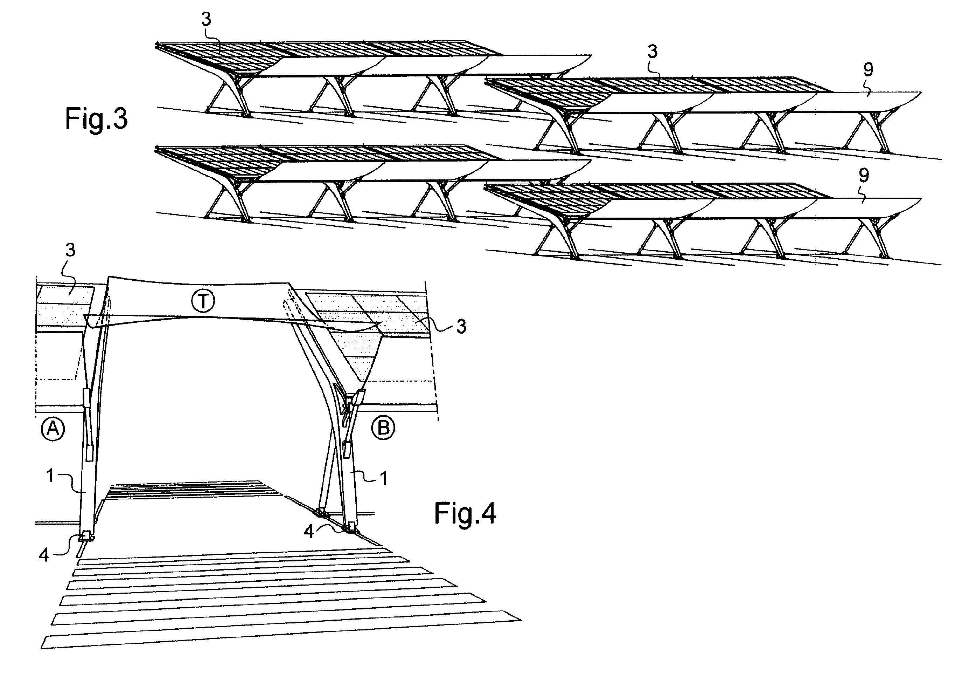

Ainsi qu'il apparaît sur les figures, l'installation est modulaire. A titre d'exemple, un module représenté en figure 1 permet de couvrir une surface correspondant à plusieurs places de parking (quatre places sont dessinées en figure 1 , à titre d'exemple), l'installation représentée en figure 3 comprenant quatre ensemble de modules, chacun des ensembles comprenant trois modules.

Bien entendu, lorsque les modules sont destinés à des parkings de grandes surfaces ou équivalents, les voies de circulation peuvent être maintenues entre les modules. Comme représenté en figure 4, ces zones de circulation, par exemple pour les piétons, sont avantageusement recouvertes par la mise en place d'une toile tendue T entre modules A et B voisins. Cette toile tendue T peut être pourvue d'impressions à caractère publicitaire ou informatif.

Pour une surface de panneaux photovoltaïque de 300 mètres carrés environ, un ensoleillement disponible de 1640 kWh/mètre carré et par an, une installation conforme à l'invention offre une production électrique de 55 000 kWh/an, ce résultat tenant compte :
- du rendement des panneaux solaires, de l'ordre de 15 à 17% ;
- des pertes aux effets de réflexion angulaire 3% ;
- des pertes liés aux onduleurs et au câblage 14% ;
- des pertes dues à l'échauffement 8.6% ;
- de l'inclinaison des panneaux à 19° ;
- de l'orientation Sud ;
- de la latitude 43,4° Nord.

L'invention trouve une application avantageuse à la couverture de zones de stationnement de véhicules, notamment parkings de centres commerciaux, l'énergie électrique produite étant réinjectée dans le réseau de distribution ou utilisée sur place.

Avantageusement, l'installation comprend des moyens d'affichage pour le public de la quantité d'électricité produite.

Il est ainsi possible de collecter en temps réel les informations relatives à la production électrique instantanée, tout en faisant les cumuls quotidiens, hebdomadaires, mensuels et annuels.

Ces informations sont fournies au service maintenance et aussi à destination du public et du centre commercial.

Le public sera informé par le biais de panneaux situés à l'entrée du centre commercial.

La durabilité de l'installation est en ligne avec la durée de vie des panneaux, typiquement garantie pour 25 ans. Par exemple, les fermes et pannes sont en acier galvanisés à chaud et revêtus d'une peinture laquée additionnelle faite en usine.

L'invention permet simultanément les fonctions suivantes :
- ombrager, par exemple un parking ;
- assurer une protection vis-à-vis de la pluie, de la neige ;
- produire de l'électricité ;
- récupérer de l'eau de pluie ;
- former des surfaces pour la communication et la publicité, notamment en termes de respect de l'environnement.

La mise en oeuvre de l'invention est avantageuse à plus d'un titre.

Le respect de l'environnement devenant un critère de choix de plus en plus fréquent pour les consommateurs.

Un client de centre commercial installé dans une région à fort ensoleillement est confronté, notamment en plein été, à de très fortes températures, lors des trajets à pied entre son véhicule et le centre commercial ou lorsqu'il entre dans son véhicule, resté en plein soleil durant parfois plus d'une heure. La plupart des véhicules sont équipés en série de systèmes de climatisation, le fonctionnement d'un climatiseur entraînant une surconsommation de 25% à 35% en ville, et de 10% à 20% en extra urbain.

Pour toutes ces raisons, les centres commerciaux bénéficient, par la mise en oeuvre de l'invention, d'une image positive, en termes de confort pour les clients et en termes de développement durable.

Lorsque les jambes de force 6,15 sont de longueur réglable, il est possible de modifier l'angle d'inclinaison des panneaux 3 et/ou l'angle d'inclinaison de la deuxième surface de couverture 9. Ces deux angles peuvent être modifiés pour tenir compte du climat, des saisons, et de l'orientation de l'installation par rapport au nord.

Dans une mise en oeuvre, les jambes de forces 6, 15 ne sont pas de longueur réglable, les des angles d'inclinaison α, β étant fixés à la pose, par positionnement au sol du talon 16 pour la jambe de force 6 des fermes 1, et par fixation du talon 17 sur les fermes 1, pour les butons 15.

## Revendications

1. Installation de production d'énergie solaire et de couverture, cette installation comprenant deux fermes (1) longitudinales supportant des pannes (2), des panneaux (3) de production d'énergie solaire formant élément de couverture et étant fixés sur ces pannes (2), **caractérisée en ce que** chaque ferme (1) est pourvue d'une pièce d'appui articulé (4) et est en porte à faux au-delà de cette pièce d'appui articulé (4), les membrures (5) des fermes (1) s'étendant en surplomb dans un plan (P) incliné d'un angle α par rapport à l'horizontale, au moins une des fermes (1) étant pourvue d'une pièce bi-articulée formant jambe de force (6) et permettant le pivotement des fermes (1) par rapport à leurs pièces d'appui articulé (4), de sorte à permettre une variation de l'angle α des membrures (5) des fermes (1), et, par là même, une variation dans l'inclinaison des panneaux (3) de production d'énergie solaire.

2. Installation selon la revendication 1, **caractérisée en ce que** chaque ferme (1) à une forme générale cintrée et comprend une première partie (7) inclinée d'un angle β par rapport à la verticale prolongée par une deuxième partie (8) formant l'angle α par rapport à l'horizontale.

3. Installation selon la revendication 1 ou 2, **caractérisée en ce qu'**au moins une ferme (1) est une poutrelle en acier monobloc ou formée par assemblage d'éléments métalliques.

4. Installation selon la revendication 3, **caractérisé en ce qu'**au moins une des fermes (1) est un profilé PRS (profilé reconstitué soudé) ou une poutre caisson.

5. Installation selon l'une quelconque des revendications précédentes, **caractérisé en ce qu'**au moins une des fermes (1) est une poutre en bois monobloc ou formée par assemblage d'éléments en bois, en particulier lamellé collé.

6. Installation selon l'une quelconque des revendications 2 à 5, **caractérisée en ce que** la deuxième partie (8) des fermes (1) présente une longueur comprise entre une et cinq fois celle de la première partie (7) de ces fermes (1).

7. Installation selon l'une quelconque des revendications 2 à 6, **caractérisé en ce que** l'angle β est compris entre 5 et 25 degrés.

8. Installation selon l'une quelconque des revendications précédentes, **caractérisée en ce que** l'angle α formé par les membrures (5) des fermes (1) est réglable entre 10 et 40 degrés.

9. Installation selon l'une quelconque des revendications précédentes, **caractérisée en ce qu'**elle comprend une deuxième surface de couverture (9), des moyens (10) de récupération de l'eau de pluie s'étendant entre la première surface (11) de couverture, formée par les panneaux (3) de production d'énergie solaire et la deuxième surface de couverture (9).

10. Installation selon la revendication 9, **caractérisée en ce que** la deuxième surface de couverture (9) est reliée aux fermes (1) par au moins un buton bi-articulé (15) formant jambe de force et permettant le pivotement de cette deuxième surface de couverture (9) par rapport aux fermes (1).

11. Installation selon la revendication 9 ou 10, **caractérisée en ce que** la deuxième surface de couverture (9) est réalisée en un matériau choisit parmi le groupe comprenant les panneaux de production d'énergie solaire, les toiles tendues, les tôles perforées, les treillis en métal déployé.

12. Installation selon l'une quelconque des revendications précédentes, **caractérisée en ce que** les panneaux (3) de production d'énergie solaire sont des panneaux photovoltaïques.

13. Installation selon l'une quelconque des revendications précédentes, **caractérisée en ce qu'**elle comprend, sous les panneaux (3) de production d'énergie solaire, une sous couche anti-effraction et anti-nidification, de type métallique en filet, bardage, ou feuille métallique.

14. Installation selon l'une quelconque des revendications précédentes, **caractérisée en ce qu'**elle comprend un dispositif de suivi télémétrique de la production électrique instantanée.

15. Application de l'installation selon l'une quelconque des revendications précédentes, à la couverture de zones de stationnement de véhicules, notamment parkings de centres commerciaux, l'énergie électrique produite étant réinjectée dans le réseau de distribution ou utilisée sur place.

16. Application selon la revendication 15, l'installation comprenant des moyens d'affichage pour le public de la quantité d'électricité produite.
